# EUROPÄISCHE PATENTSCHRIFT

(11) **EP 3 688 494 B1**
(45) Veröffentlichungstag und Bekanntmachung des Hinweises auf die Patenterteilung: **05.11.2025**
(21) Anmeldenummer: 18773167.4
(22) Anmeldetag: 19.09.2018
(51) Int. Cl.: G01S 19/07, G01S 19/41

(54) **VERFAHREN UND VORRICHTUNG ZUM BEREITSTELLEN VON KORREKTURDATEN ZUR SATELLITENNAVIGATION**
METHOD AND APPARATUS FOR PROVIDING CORRECTION DATA FOR SATELLITE NAVIGATION
PROCÉDÉ ET DISPOSITIF PERMETTANT DE FOURNIR DES DONNÉES DE CORRECTION POUR NAVIGATION PAR SATELLITE

(30) Priorität: 26.09.2017 DE 102017217017
(43) Veröffentlichungstag der Anmeldung: 05.08.2020
(73) Patentinhaber: Robert Bosch GmbH, 70442 Stuttgart (DE)
(72) Erfinder: LIMBERGER, Marco, 71638 Ludwigsburg (DE); LANGER, Markus, 71679 Asperg (DE)
(86) Internationale Anmeldenummer: PCT/EP2018/075310
(87) Internationale Veröffentlichungsnummer: WO 2019/063379

(56) Entgegenhaltungen:
- DE-A1- 102006 016 281
- JP-A- 2007 170 900
- US-A1- 2016 036 519
- US-B1- 9 612 340
- US-B2- 6 674 398

## Beschreibung

### Stand der Technik

Die Erfindung geht von einer Vorrichtung oder einem Verfahren nach Gattung der unabhängigen Ansprüche aus. Gegenstand der vorliegenden Erfindung ist auch ein Computerprogramm.

Zur Korrektur von Positionierungssignalen in der Satellitennavigation können beispielsweise Abweichungen in der Ionosphäre der Erde berücksichtigt werden. Hierzu kann insbesondere auf ein Netzwerk von geostationären, bodenseitigen Messstationen zurückgegriffen werden.

Die US 2016/0036519 A1 offenbart ein Verfahren zum Erfassen von Atmosphärendaten, wobei eine Mehrzahl von Satellitensignalen von einem mobilen Mehrfrequenz-Satellitenempfänger empfangen werden und ein Atmosphärenabtastwert drahtlos an eine andere Position übertragen wird.

Die US 6,674,393 B2 offenbart ein Verfahren und eine Vorrichtung zum Bereitstellen eines integrierten Satellitensystems für Kommunikation, Navigation und Überwachung, wobei mindestens ein mobiles Nutzergerät eine Zweiwegekommunikation mit einer Mehrzahl von Satelliten unterhalten kann und Überwachungssignale aussenden kann, wobei die Signale durch das System auch verwendet werden können, um den Zustand der Ionosphäre zu messen und zu übertragen.

Die JP 2007 170900 A offenbart ein Verfahren zur Verbesserung der Positionsgenauigkeit in kurzer Zeit durch effizientes Senden bzw. Empfangen von lonosphären-Korrekturdaten zwischen einem Satelliten und einer Bodenstation, ohne die Notwendigkeit des Empfangs aller Ionosphären-Korrekturdaten.

### Offenbarung der Erfindung

Vor diesem Hintergrund werden mit dem hier vorgestellten Ansatz ein Verfahren, weiterhin eine Vorrichtung, welche dieses Verfahren verwendet, sowie schließlich ein entsprechendes Computerprogramm gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Gemäß Ausführungsformen kann insbesondere eine Verarbeitung einer Mehrzahl oder Vielzahl von Zustandsinformationen hinsichtlich der Ionosphäre der Erde und entsprechenden geografischen Positionen, die beispielsweise von Nutzern eines Navigationsdienstes bereitgestellt und zusätzlich oder alternativ aus beliebigen Quellen bezogen werden, erreicht werden, um daraus Korrekturdaten für globale Satellitennavigation zu berechnen und zusätzlich oder alternativ vorhandene Korrekturdaten und gegebenenfalls Korrekturmodelle zu verbessern. Somit kann zur Korrektur von durch Satelliten ausgesendeten Positionssignalen zur Satellitennavigation ein Zustand der Ionosphäre der Erde mittels Messwertgewinnung durch eine Mehrzahl freiwilliger Teilnehmer bzw. mittels sogenannter Crowd-IT, sogenanntem Crowdsourcing oder sogenannter Crowd-Iono genauer und flächendeckender einbezogen werden. Die Zustandsinformationen von einer Mehrzahl oder Vielzahl von zur Satellitennavigation genutzten Satellitenempfangsgeräten ermöglichen es, ab einer bestimmten Anzahl und Dichte teilnehmender Satellitenempfangsgeräte ein Referenzstationsnetz zur lonosphären-Zustandsbestimmung auszudünnen bzw. auf ein dichtes regionales Referenzstationsnetz zu verzichten und lediglich ein weniger engmaschiges globales Referenzstationsnetz zu nutzen.

Vorteilhafterweise kann gemäß Ausführungsformen insbesondere unter anderem somit eine Genauigkeit von Korrekturen von Navigationssignalen hinsichtlich Abweichungen, Störungen und dergleichen in der Ionosphäre der Erde erhöht werden. Zudem kann eine engmaschige und flächendeckende Bestimmung eines Zustands der Ionosphäre ermöglicht werden. Somit können Bereiche, in denen ein Zustand der Ionosphäre eventuell lediglich durch Interpolation ermittelt werden kann, vorteilhaft verkleinert werden. Ein Korrekturdienstanbieter kann die Zustandsinformationen nutzen, um Schätzwerte einer lokalen Ionosphärenaktivität zu verbessern und so eine Positionserfassungsgenauigkeit und Konvergenzzeit (Time To First Fix, TTFF) für Nutzer zu verbessern. Beispielsweise kann eine Leistungsfähigkeit von Nutzern von Einfrequenz-Satellitenempfangsgeräten stark durch lonosphärenerscheinungen beeinflusst sein, wobei die Zustandsinformationen gemäß Ausführungsformen insbesondere exakte Korrekturen ermöglichen können, um beispielsweise ein sogenanntes Precise-Point-Positioning bzw. eine präzise Positionierung auf Dezimeter-Ebene zu erreichen. Das sogenannte Crowdsourcing der Zustandsinformationen kann insbesondere unter Verwendung von Zweifrequenz-Satellitenempfangsgeräten oder Mehrfrequenz-Satellitenempfangsgeräten, von denen beispielsweise eine Vielzahl in Fahrzeugen eingebaut sein können, vorteilhaft durchgeführt werden. Die Zustandsinformationen und die geografische Position oder Positionsschätzung eines solchen Satellitenempfangsgeräts können beispielsweise von einem Fahrzeug über die Cloud bzw. Datenwolke mit einer Datenverbindungsfähigkeit angemessener Datenrate geliefert werden.

Es wird ein Verfahren zum Bereitstellen von Korrekturdaten zur Satellitennavigation vorgestellt, wobei das Verfahren zumindest folgenden Schritt aufweist:
Ermitteln der Korrekturdaten unter Verwendung von einer Mehrzahl von Zustandssignalen über die Ionosphäre der Erde, wobei die Zustandssignale von einer Schnittstelle zu einer Mehrzahl von mobilen Satellitenempfangsgeräten zur Satellitennavigation eingelesene Signale repräsentieren, wobei jedes Zustandssignal eine geografische Position eines der Satellitenempfangsgeräte und eine unter Verwendung mindestens eines zwischen zumindest einem Satelliten und dem Satellitenempfangsgerät übertragenen Satellitensignals bestimmte Zustandsinformation der Ionosphäre der Erde aufweist.

Dieses Verfahren kann beispielsweise in Software oder Hardware oder in einer Mischform aus Software und Hardware beispielsweise in einem Steuergerät oder einer Vorrichtung implementiert sein. Die Korrekturdaten können geeignet sein, um eine Korrektur von Satellitensignalen im Hinblick auf Abweichungen, Störungen und zusätzlich oder alternativ einen aktuellen Zustand der Ionosphäre zu bewirken. Ein Satellitenempfangsgerät kann ausgebildet sein, um unter Verwendung mindestens eines Satellitensignals eine Positionsbestimmung durch Satellitennavigation für einen Nutzer und zusätzlich oder alternativ für eine Ausrüstung eines Nutzers zu ermöglichen. Das mindestens eine Satellitensignal kann auch vormals ermittelte Korrekturdaten aufweisen. Die vormals ermittelten Korrekturdaten können bei einer vorherigen Ausführung oder Iteration des Verfahrens bereitgestellt worden sein. Das Satellitenempfangsgerät kann als ein Zweifrequenz-Satellitenempfangsgerät oder Mehrfrequenz-Satellitenempfangsgerät ausgeführt sein. Die Zustandsinformation kann eine Kenngröße der Ionosphäre der Erde repräsentieren, insbesondere in einem lokalen Bereich der Ionosphäre zwischen der geografischen Position eines betreffenden Satellitenempfangsgerätes und einem betreffenden Satelliten.

Gemäß einer Ausführungsform können im Schritt des Ermittelns die Korrekturdaten unter Verwendung einer Mehrzahl von Referenz-Zustandssignalen ermittelt werden. Hierbei können die Referenz-Zustandssignale von stationären Referenz-Satellitenempfangsgeräten eingelesene Signale repräsentieren. Zusätzlich oder alternativ können im Schritt des Ermittelns die Korrekturdaten unter Verwendung eines lonosphärenkorrekturmodells ermittelt werden. Zusätzlich oder alternativ können im Schritt des Ermittelns die Korrekturdaten unter Verwendung eines Modellalgorithmus ermittelt werden. Die Mehrzahl von Referenz-Satellitenempfangsgeräten können in einem regionalen, überregionalen und zusätzlich oder alternativ globalen Gitter oder Netzwerk angeordnet sein. Eine solche Ausführungsform bietet den Vorteil, dass eine Genauigkeit von Korrekturen hinsichtlich Ionosphäreneffekten weiter erhöht und somit eine Satellitennavigation weiter verbessert werden kann.

Auch kann das Verfahren einen Schritt des Einlesens der Zustandssignale von der Schnittstelle zu der Mehrzahl von mobilen Satellitenempfangsgeräten zur Satellitennavigation aufweisen. Eine solche Ausführungsform bietet den Vorteil, dass eine Mehrzahl von Zustandssignalen von mobilen Satellitenempfangsgeräten verarbeitet werden können, die zur Satellitennavigation sowie als Beobachtungsstationen genutzt werden können.

Dabei kann im Schritt des Einlesens zumindest eine Teilmenge der Zustandssignale von einer Schnittstelle zu einer Mehrzahl von fahrzeugmontierten Satellitenempfangsgeräten eingelesen werden. Ein fahrzeugmontiertes Satellitenempfangsgerät kann in einem Fahrzeug montiert, eingebaut oder befestigt sein oder kann abnehmbar in einem Fahrzeug angeordnet sein. Eine solche Ausführungsform bietet den Vorteil, dass in Fahrzeugen mehrheitlich ohnehin bereits verbaute Satellitenempfangsgeräte zur Datengewinnung genutzt werden können. Somit kann der Zustand der Ionosphäre für die Korrektur genau, engmaschig und unaufwendig bestimmt werden.

Ferner kann das Verfahren einen Schritt des Ausgebens der Korrekturdaten an den zumindest einen Satelliten aufweisen. Hierbei können die Korrekturdaten für eine Korrektur eines Übertragens des mindestens einen Satellitensignals zwischen dem zumindest einen Satelliten und der Mehrzahl von mobilen Satellitenempfangsgeräten verwendbar sein. Zusätzlich können im Schritt des Ausgebens die Korrekturdaten an die Mehrzahl von Satellitenempfangsgeräten ausgegeben werden. Eine solche Ausführungsform bietet den Vorteil, dass eine zuverlässige und genaue Korrektur für eine Satellitennavigation ermöglicht wird.

Gemäß einer Ausführungsform können die Zustandsinformation einen Gesamtelektroneninhalt als Kenngröße der Ionosphäre der Erde repräsentieren. Hierbei kann der Gesamtelektroneninhalt als ein Produkt aus Elektronendichte und Weg, gemessen in Elektronen je Quadratmeter definiert sein. Eine solche Ausführungsform bietet den Vorteil, dass anhand einer so gearteten Zustandsinformation verlässliche Aussagen über den Zustand der Ionosphäre in einem lokalen Bereich zwischen einem jeweiligen Satellitenempfangsgerät und einem jeweiligen Satelliten gewonnen werden können.

Auch kann das Verfahren einen Schritt des Bestimmens der Zustandsinformation unter Verwendung einer Signalveränderung des mindestens einen Satellitensignals aufweisen. Hierbei kann die Signalveränderung ein Ergebnis eines Vergleichs zumindest einer Signaleigenschaft bezogen auf zumindest zwei Übertragungsfrequenzen des mindestens einen Satellitensignals repräsentieren. Die zumindest eine Signaleigenschaft kann einen Pseudoabstand, eine Trägerphase und zusätzlich oder alternativ mindestens eine weitere Signaleigenschaft repräsentieren. Eine solche Ausführungsform bietet den Vorteil, dass die Zustandsinformationen sicher und genau ermittelt werden kann.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Hierzu kann die Vorrichtung zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EEPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

In einer vorteilhaften Ausgestaltung kann die Vorrichtung als ein Korrekturdienst oder eine Korrekturdiensteinrichtung ausgeführt sein. Hierbei erfolgt durch die Vorrichtung eine Steuerung einer Signalübertragung zwischen zumindest einem Satelliten und einer Mehrzahl von Satellitenempfangsgeräten zur satellitengestützten Navigation. Hierzu kann die Vorrichtung beispielsweise auf Sensorsignale oder Eingangssignale wie Zustandssignale und Referenz-Zustand Signale zugreifen. Die Ansteuerung erfolgt über Signalübertragungseinrichtungen wie Sendegeräte, Sende-Empfangsgeräte und Antennen.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele des hier vorgestellten Ansatzes sind in den Zeichnungen dargestellt und in der nachfolgenden Beschreibung näher erläutert. Es zeigt:
Fig. 1 eine schematische Darstellung eines Satellitennavigationssystems;
Fig. 2 eine schematische Darstellung eines Satellitennavigationssystems mit einer Vorrichtung zum Bereitstellen gemäß einem Ausführungsbeispiel; und
Fig. 3 ein Ablaufdiagramm eines Verfahrens zum Bereitstellen gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

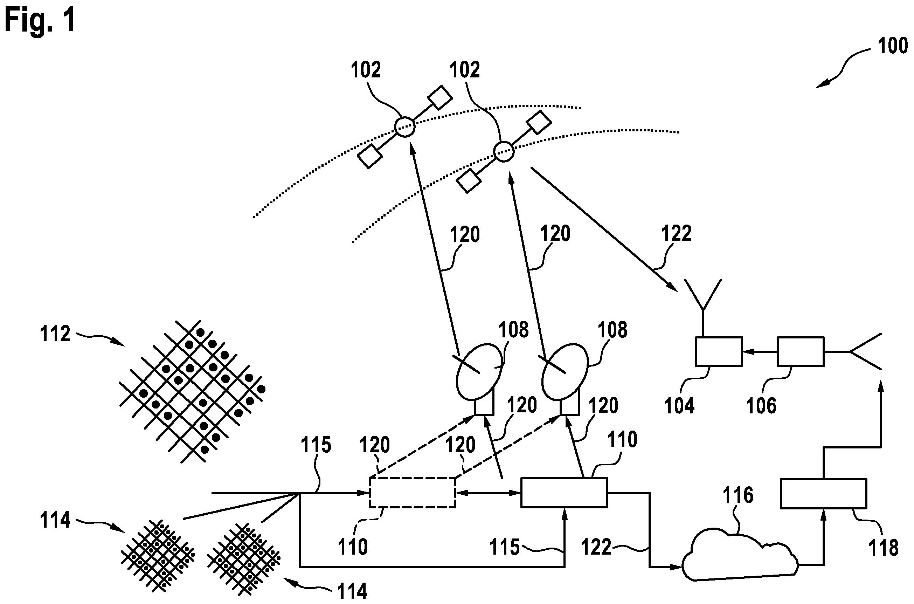

Fig. 1 zeigt eine schematische Darstellung eines Satellitennavigationssystems 100. Das Satellitennavigationssystem 100 ist beispielsweise als ein sogenanntes globales ziviles Satellitennavigationssystem (GNSS = Global Navigation Satellite System) ausgeführt. Dabei weist das Satellitennavigationssystem 100 einen Korrekturdienst auf.

Das Satellitennavigationssystem 100 weist Satelliten 102 auf, die insbesondere in einer geostationären Umlaufbahn der Erde angeordnet sind. Insbesondere weist das Satellitennavigationssystem 100 eine Mehrzahl von Satelliten 102 bzw. redundante Satelliten 102 auf. Dabei kann ein erster der Satelliten 102 beispielsweise über Nordamerika positioniert sein, wobei ein zweiter der Satelliten 102 beispielsweise über Europa positioniert sein kann.

Ferner weist das Satellitennavigationssystem 100 eine Mehrzahl von Satellitenempfangsgeräten 104 auf, wobei in der Darstellung von Fig. 1 aus Platzgründen beispielhaft lediglich ein Satellitenempfangsgerät 104 gezeigt ist. Das Satellitenempfangsgerät 104 kann auch als ein GNSS-Empfänger 104 bezeichnet werden. Mit dem Satellitenempfangsgerät 104 sind auf signalübertragungsfähige Weise Kommunikationsmodule 106 verbunden.

Das Satellitennavigationssystem 100 weist auch eine Mehrzahl von Sendestationen 108 zur Übertragung von Signalen an die Satelliten 102 auf. Die Sendestationen 108 können auch als Aufwärtsstrecke-Stationen 108, uplink-Stationen 108 oder Stationen für eine Aufwärtsstrecke (uplink) bezeichnet werden. Die Sendestationen 108 sind signalübertragungsfähig mit zumindest einem Datenzentrum 110 bzw. Server 110 verbunden. In Fig. 1 sind beispielhaft lediglich zwei Datenzentren 110 dargestellt. Die Datenzentren 110 sind miteinander signalübertragungsfähig verbunden, insbesondere um eine Konsistenzprüfung durchzuführen.

Zudem weist das Satellitennavigationssystem 100 eine Mehrzahl globaler Referenz-Stationen 112 und optional eine Mehrzahl zusätzlicher lokaler Referenz-Stationen 114 auf. Die Referenz-Stationen 112, 114 sind ausgebildet, um Korrekturwerte 115 zu gewinnen. Die Referenzstationen 112, 114 sind signalübertragungsfähig mit dem zumindest einen Datenzentrum 110 verbunden.

Das zumindest eine Datenzentrum 110 ist über einen Backend-Server 116 und eine mobile Datenverbindung 118 bzw. mobile Internet-Verbindung 118 mit den Kommunikationsmodulen 106 und somit den Satellitenempfangsgeräten 104 signalübertragungsfähig verbunden.

Von dem zumindest einen Datenzentrum 110 aus werden Korrekturdaten 120 über die Sendestationen 108 an die Satelliten 102 übertragen. Ferner werden Integritätsinformationen 122 von dem zumindest einen Datenzentrum 110 aus über den Backend-Server 116 und die mobile Datenverbindung 118 an die Kommunikationsmodule 106 und somit die Satellitenempfangsgeräte 104 sowie von den Satelliten 102 aus an die Satellitenempfangsgeräte 104 übertragen.

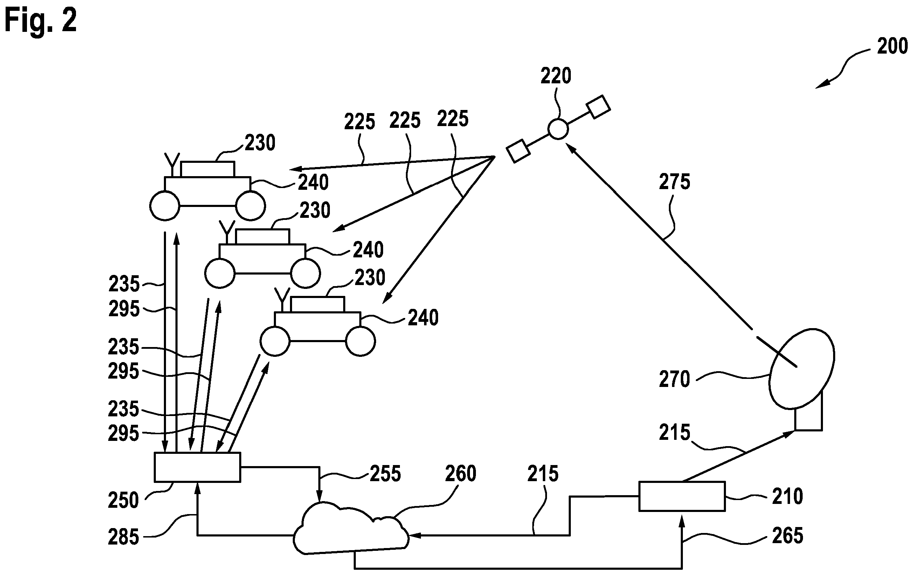

Fig. 2 zeigt eine schematische Darstellung eines Satellitennavigationssystems 200 mit einer Vorrichtung 210 zum Bereitstellen gemäß einem Ausführungsbeispiel. Das Satellitennavigationssystem 200 ist beispielsweise als ein sogenanntes globales ziviles Satellitennavigationssystem (GNSS = Global Navigation Satellite System) ausgeführt. Die Vorrichtung 210 ist ausgebildet, um Korrekturdaten 215 zur Korrektur für eine Satellitennavigation bereitzustellen. Anders ausgedrückt ist die Vorrichtung 210 ausgebildet, um eine GNSS-Korrektur zu ermöglichen und/oder durchzuführen.

Ferner weist das Satellitennavigationssystem 200 gemäß dem in Fig. 2 dargestellten Ausführungsbeispiel beispielhaft lediglich einen Satelliten 220, insbesondere einen geostationären Satelliten 220, beispielhaft lediglich drei Satellitenempfangsgeräte 230 zur Satellitennavigation, die in beispielhaft lediglich drei Fahrzeugen 240 montiert sind, eine Schnittstelle 250, beispielsweise in Gestalt einer mobilen Datenschnittstelle, einen sogenannten bei Backend-Server 260 und beispielhaft lediglich eine Bodenstation 270 bzw. Datenübertragungseinrichtung 270 auf.

Die Vorrichtung 210 ist datenübertragungsfähig über die Bodenstation 270 mit dem Satelliten 220 verbunden. Ferner ist die Vorrichtung 210 datenübertragungsfähig über den Backend-Server 260 und die Schnittstelle 250 mit den Satellitenempfangsgeräten 230 verbunden. Die Satellitenempfangsgeräte 230 sind datenübertragungsfähig mit dem Satelliten 220 verbunden.

Der Satellit 220 ist ausgebildet, um Satellitensignale 225 auszusenden. Die Satellitenempfangsgeräte 230 sind ausgebildet, um die Satellitensignale 225 zu empfangen. Dabei kann jedes der Satellitensignale 225 aufgrund eines lokal unterschiedlichen Zustands der Ionosphäre der Erde eine individuelle Signalveränderung aufweisen.

Jedes der Satellitenempfangsgeräte 230 ist ausgebildet, um ein Zustandssignal 235, welches die Zustandsinformation und eine geografische Position des Satellitenempfangsgeräts 230 aufweist, an die Schnittstelle 250 auszugeben. Die Zustandsinformation repräsentiert eine Information über einen Zustand der Ionosphäre in einem Bereich zwischen dem jeweiligen Satellitenempfangsgerät 230 und dem Satelliten 220. Die Satellitenempfangsgeräte 230 sind gemäß einem Ausführungsbeispiel ausgebildet, um unter Verwendung einer Signalveränderung der Satellitensignale 225 eine Zustandsinformation der Ionosphäre bzw. eines lokalen Zustandes der Ionosphäre in einem Bereich zwischen dem jeweiligen Satellitenempfangsgerät 230 und dem Satelliten 220 zu bestimmen. Die Satellitenempfangsgeräte 230 sind beispielsweise ausgebildet, um die Signalveränderung durch einen Vergleich zumindest einer Signaleigenschaft eines Satellitensignals 225 bezogen auf zumindest zwei Übertragungsfrequenzen des Satellitensignals 225 zu ermitteln.

Die Schnittstelle 250 ist ausgebildet, um eine Übertragung der Zustandssignale 235 als übertragene Zustandssignale 255 an den Backend-Server 260 zu ermöglichen und/oder durchzuführen. Der Backend-Server 260 ist ausgebildet, um die übertragenen Zustandssignale 255 weiterzuleiten, zu sammeln und/oder zu verarbeiten. Ferner ist der Backend-Server 260 ausgebildet, um die übertragenen Zustandssignale 255 in Gestalt von weitergeleiteten Zustandssignale 265 an die Vorrichtung 210 weiterzuleiten.

Die Vorrichtung 210 ist ausgebildet, um in Gestalt der weitergeleiteten Zustandssignale 265 eine Mehrzahl der Zustandssignale 235 von der Schnittstelle 250 einzulesen. Auch ist die Vorrichtung 210 ausgebildet, um unter Verwendung einer Mehrzahl von Zustandssignalen 235 bzw. übertragenen Zustandssignalen 255 bzw. weitergeleiteten Zustandssignalen 265 Korrekturdaten 215 zu ermitteln. Genauer gesagt ist die Vorrichtung 210 ausgebildet, um die Korrekturdaten 215 unter Verwendung der weitergeleiteten Zustandssignale 265 zu ermitteln, wobei die weitergeleiteten Zustandssignale 265 eine weitergeleitete Version der übertragenen Zustandssignale 255 repräsentieren, wobei die übertragenen Zustandssignale 255 eine übertragene Version der Zustandssignale 235 repräsentieren.

Ferner ist die Vorrichtung 210 ausgebildet, um die Korrekturdaten 215 über die Bodenstation 270 an den Satelliten 220 auszugeben. Hierbei ist die Bodenstation 270 ausgebildet, um die Korrekturdaten 215 als übertragene Korrekturdaten 275 an den Satelliten 220 zu übertragen. Der Satellit 220 ist ausgebildet, um die Satellitensignale 225 unter Verwendung der Korrekturdaten 215 bzw. der übertragenen Korrekturdaten 275 auszusenden. Die Vorrichtung 210 ist auch ausgebildet, um die Korrekturdaten 215 an den Backend-Server 260 auszugeben. Der Backend-Server 260 ist ausgebildet, um die Korrekturdaten 215 weiterzuleiten, zu sammeln und/oder zu verarbeiten. Auch ist der Backend-Server 260 ausgebildet, um die Korrekturdaten 215 als weitergeleitete Korrekturdaten 285 an die Schnittstelle 250 weiterzuleiten. Die Schnittstelle 250 ist ausgebildet, um eine Übertragung der weitergeleiteten Korrekturdaten 285 als übertragene Korrekturdaten 295 an die Satellitenempfangsgeräte 230 zu ermöglichen und/oder durchzuführen.

Nutzer des Satellitennavigationssystems 200 liefern GNSS-Beobachtungsgrößen in Gestalt der Zustandssignale 235, um die Erzeugung präziser lonosphärenkorrekturen zu ermöglichen, welche dann dem Nutzer bereitgestellt werden können.

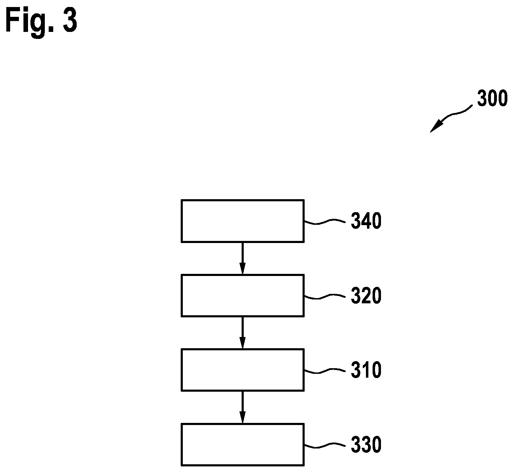

Fig. 3 zeigt ein Ablaufdiagramm eines Verfahrens 300 zum Bereitstellen gemäß einem Ausführungsbeispiel. Das Verfahren 300 ist ausführbar, um Korrekturdaten zur Satellitennavigation bereitzustellen. Dabei ist das Verfahren 300 zum Bereitstellen in Verbindung mit bzw. unter Verwendung von der Vorrichtung aus Fig. 2 oder einer ähnlichen Vorrichtung sowie zumindest einem Satellitenempfangsgerät aus Fig. 2 oder einem ähnlichen Satellitenempfangsgerät ausführbar.

In einem Schritt 310 des Ermittelns werden bei dem Verfahren 300 die Korrekturdaten unter Verwendung von einer Mehrzahl von Zustandssignalen über die Ionosphäre der Erde ermittelt. Die Zustandssignale repräsentieren hierbei von einer Schnittstelle zu einer Mehrzahl von mobilen Satellitenempfangsgeräten zur Satellitennavigation eingelesene Signale. Jedes Zustandssignal weist eine geografische Position eines der Satellitenempfangsgeräte und eine unter Verwendung mindestens eines zwischen zumindest einem Satelliten und dem Satellitenempfangsgerät übertragenen Satellitensignals bestimmte Zustandsinformation der Ionosphäre der Erde auf.

Gemäß einem Ausführungsbeispiel weist das Verfahren 300 zum Bereitstellen einen Schritt 320 des Einlesens der Zustandssignale von der Schnittstelle zu der Mehrzahl von mobilen Satellitenempfangsgeräten zur Satellitennavigation auf. Insbesondere wird im Schritt 320 des Einlesens zumindest eine Teilmenge der Zustandssignale von einer Schnittstelle zu einer Mehrzahl von fahrzeugmontierten Satellitenempfangsgeräten eingelesen.

Gemäß einem weiteren Ausführungsbeispiel weist das Verfahren 300 zum Bereitstellen einen Schritt 330 des Ausgebens der Korrekturdaten an den zumindest einen Satelliten auf. Die Korrekturdaten sind hierbei für eine Korrektur eines Übertragens des mindestens einen Satellitensignals zwischen dem zumindest einen Satelliten und der Mehrzahl von mobilen Satellitenempfangsgeräten verwendbar.

Insbesondere repräsentiert die Zustandsinformation einen Gesamtelektroneninhalt als Kenngröße der Ionosphäre der Erde. Der Gesamtelektroneninhalt ist als ein Produkt aus Elektronendichte und Weg, gemessen in Elektronen je Quadratmeter definiert. Gemäß einem Ausführungsbeispiel werden im Schritt 310 des Ermittelns die Korrekturdaten unter Verwendung einer Mehrzahl von Referenz-Zustandssignalen ermittelt. Die Referenz-Zustandssignale repräsentieren von stationären Referenz-Satellitenempfangsgeräten eingelesene Signale. Zusätzlich oder alternativ werden im Schritt 310 des Ermittelns die Korrekturdaten unter Verwendung eines lonosphärenkorrekturmodells ermittelt. Zusätzlich oder alternativ werden im Schritt 310 des Ermittelns die Korrekturdaten unter Verwendung eines Modellalgorithmus ermittelt.

Gemäß einem weiteren Ausführungsbeispiel weist das Verfahren 300 zum Bereitstellen auch einen Schritt 340 des Bestimmens der Zustandsinformation unter Verwendung einer Signalveränderung des mindestens einen Satellitensignals auf. Die Signalveränderung repräsentiert bzw. ergibt sich als ein Ergebnis eines Vergleichs zumindest einer Signaleigenschaft bezogen auf zumindest zwei Übertragungsfrequenzen des mindestens einen Satellitensignals. Der Schritt 340 des Bestimmens ist beispielsweise unter Verwendung der Vorrichtung aus Fig. 2 oder einer ähnlichen Vorrichtung und/oder unter Verwendung zumindest eines der Satellitenempfangsgerät aus Fig. 2 oder zumindest einem ähnlichen Satellitenempfangsgerät durchführbar.

Unter Bezugnahme auf die vorstehend beschriebenen Figuren werden nachfolgend Ausführungsbeispiele sowie Vorteile von Ausführungsbeispielen mit anderen Worten zusammenfassend nochmals kurz erläutert und/oder vorgestellt.

Gemäß Ausführungsbeispielen wird beispielsweise ein Vergleich von lonosphärenkorrekturdaten mit aus GNSS-Empfängerbeobachtungswerten ermittelten Ionosphärenfehlern durchgeführt. Auch wird gemäß Ausführungsbeispielen insbesondere ein Zustand der Ionosphäre durch Crowdsourcing unter Verwendung von TEC-Werten bestimmt (TEC = Total electron content, dt. etwa Gesamtelektroneninhalt; Kenngröße der Ionosphäre der Erde; Produkt aus Elektronendichte und Weg, gemessen in Elektronen pro Quadratmeter; durch Sonnenaktivität beeinflusst) bestimmt.

Insbesondere bieten GNSS-Korrekturdienstanbieter ihre Dienste für eine Vielzahl von Anwendungen an, die beispielsweise sowohl kostengünstige Ein- als auch Zweifrequenz-GNSS-Empfänger (oder für mehr Frequenzen) als Satellitenempfangsgeräte 230 verwenden. Dieselben stellen GNSS-Korrekturdaten 235, 255, 265 bereit, die verwendet werden können, um genauere Positionierungslösungen zu erzielen, beispielsweise genauer als auf Dezimeter-Ebene. Die Korrekturdaten 235, 255, 265 ermöglichen, dass die Satellitenempfangsgeräte 230 systemische Fehlerquellen, wie beispielsweise Orbit- und Uhrenfehler, und Satellitenabweichungen sowie Ionosphäreneinflüsse abmildern oder meist beseitigen können. Besonders für eine Einfrequenzausrüstung bzw. Einfrequenz-Empfänger ist ein Beseitigen oder Abmildern des Einflusses der Ionosphäre beispielsweise bedeutsam hinsichtlich des Erreichens einer hohen Positionierungsgenauigkeit.

Der Zustand der Ionosphäre lässt sich insbesondere durch den Gesamtelektroneninhalt (TEC) beurteilen. Dieser Parameter wird von Dienstanbietern durch Sammeln von Messdaten von einer Vielzahl von Referenzstationen 112 und 114 bestimmt. Typischerweise verwenden Dienstanbieter ein globales oder regionales Netz von Referenzstationen 112 und 114 mit einer Grundlinienlänge zwischen Referenzstationen von beispielsweise über 1000 Kilometern (weltweites Precise Point Positioning, PPP) bis zu 70 Kilometern (kleinskalige Echtzeitkinematik (Real Time Kinematic, RTK)). Eine Bereitstellung von Diensten für Nutzer innerhalb der Grenzen ihres Netzwerks (global oder lokal) und eine Verwendung eines Modells raumbasierter Darstellung (SSR-Modell, SSR = Space-based Representation) erfordern beispielsweise, dass lonosphärenkorrekturparameter so präzise wie möglich abgeschätzt werden. Typischerweise können die lonosphärenkorrekturparameter als ein dünnschichtiges sphärisches Modell mit einem in einem Gitter angeordneten, sogenannten VTEC-Wert (VTEC = vertikaler TEC) bereitgestellt werden. Wenn die Ionosphäre irgendwelchen Störungen unterliegt, beispielsweise Sonnenstürmen oder sich bewegenden Ionosphärenstörungen (TID, Travelling lonospheric Disturbances), dann können die Dienstanbieter einen wahren Zustand der Ionosphäre zwischen solchen Gitterpunkten nicht schätzen oder ist eine vorhandene Ionosphärenstörung aufgrund einer ungeeigneten Interpolation zwischen Gitterpunkten eventuell geglättet. Gemäß Ausführungsformen wird jedoch ermöglicht, dass Nutzer des Dienstes die Ionosphärenstörung dennoch erkennen können und eine Verbesserung oder zumindest Beibehaltung ihrer Positionierungsgenauigkeit bzw. Positionserfassungsgenauigkeit bzw. Positionserfassungsfähigkeit erfahren. Die resultierende Auswirkung kann beispielsweise für eine Einfrequenz-Verbraucherausrüstung stärker ausfallen als für eine Zweifrequenz-Ausrüstung.

TEC-Messungen für die Zustandsinformation können durch die Satellitenempfangsgeräte 230 und/oder die Vorrichtung 210 erhalten werden, indem beispielsweise eine Differenz zwischen Beobachtungswerten einer Pseudoabstandsmessung bzw. Codemessung und einer Trägerphasenmessung zwischen zwei von dem gleichen Satelliten 220 ausgesandten Frequenzen des Satellitensignals 225 gebildet wird. TEC-Messungen auf Basis der Trägerphase sind genau, aber zweideutig. Codebasierte Messungen liefern absolute, jedoch verrauschte TEC-Messungen zusammen mit einer Träger- TEC-Glättung der Code- TEC-Messwerte. Zweifrequenz-Empfänger als Satellitenempfangsgeräte 230 können einen TEC-Wert für Sichtlinienmessungen zu jedem Satelliten 220 bestimmen, den dieselben verfolgen, typischerweise schiefer TEC oder STEC (slant TEC) genannt. Die erforderlichen Messungen sind typischerweise Pseudoabstandsmessung bzw. Codemessung auf L1 und L2, P1 und P2 genannt, und Trägerphasenmessung für L1 und L2, Phi1 und Phi2 genannt. Es können auch andere Frequenzen oder eine Kombination von Frequenzen verwendet werden. Bei aktuellen Anwendungen ist die Position des verfolgenden bzw. trackenden GNSS-Empfängers bzw. Satellitenempfangsgerätes 230 exakt bekannt, d. h. typischerweise auf weniger als einen Zentimeter genau. Für jeden durch ein Satellitenempfangsgerät 230 verfolgten Satelliten 220 bzw. GNSS-Satelliten können Messungen verarbeitet werden, um zusammen mit einem Strahlausbreitungsweg von dem Satelliten 220 zu dem Satellitenempfangsgerät 230 den TEC zu bestimmen.

In einer Netzwerkanwendung können gemäß einem Ausführungsbeispiel Messdaten von vielen Referenzempfängern 112 und 114 verwendet werden, um beispielsweise VTEC-Werte zusammen mit anderen Parametern zu schätzen, wie beispielsweise Orbit-, Uhren- und Satellitenabweichungen. Im Gegensatz zu der Bestimmung des TEC lediglich mittels eines solchen Netzwerkes kann gemäß Ausführungsbeispielen erreicht werden, dass nicht mehr nur auf ein solches Netzwerk zurückgegriffen wird, welches abhängig von der erforderlichen Genauigkeit und Anwendung typischerweise Grundlinienlängen von mehr als 70 Kilometern, 200 Kilometern oder sogar 1000 Kilometern aufweist. Dies bedeutet, dass ein Nutzer dieser TEC-Werte bzw. eine diese TPC-Werte nutzen der Anwendung zwischen den von dem Netzbetreiber empfangenen Korrekturdaten weniger umfangreich zu interpolieren braucht. Hierbei kann ein bestehendes Netzwerk ausgedünnt werden bzw. durch die mobilen Satellitenempfangsgeräte 230 dichter gemacht werden, d. h. mehr Referenzstationen 112 und 114 sowie mobile Satellitenempfangsgeräte 230 vorgesehen werden, um den Zustand der Ionosphäre genauer abschätzen bzw. bestimmen zu können. Schnelle Veränderungen in der Ionosphäre aufgrund von Ereignissen, wie beispielsweise Sonnenstürmen, können auf diese Weise genauer und erfasst werden, weil Daten von mehreren Referenzstationen 112 und 114 sowie mobilen Satellitenempfangsgeräten 230 die Auswirkung eines derartigen Phänomens zeigen können. Zusätzlich kann ein in der Signalauswertung auftretendes Verschwinden einer Störung aufgrund von Glättungswirkungen eines Interpolationsverfahrens abgemildert oder beseitigt werden. Satellitenempfangsgeräte 230 können mehr als zwei Frequenzen unterstützen, was eine Einschätzung von Ionosphärenerscheinungen höherer Ordnung ermöglicht.

Verbesserungen an der GNSS-Empfängertechnologie im Hinblick auf Kosten und Leistungsfähigkeit führen zu einem Einbau kostengünstiger Satellitenempfangsgeräte 230 für zwei oder mehr Frequenzen in Fahrzeuge 240. Diese GNSS-Empfänger bzw. Satellitenempfangsgeräte 230 können eine Positionierung und Navigation mit einer Genauigkeit unter der Dezimeter-Ebene unter Verwendung externer Korrekturdienstanbieter ermöglichen. Damit ein GNSS-Empfänger bzw. Satellitenempfangsgerät 230 diesen Genauigkeitsgrad erzielen kann, ist das Satellitenempfangsgerät 230 ausgebildet, um für jeden Satelliten 220, den dasselbe verfolgt, sehr präzise Pseudoabstands- bzw. Code- und Trägerphasenmessungen auf beiden Frequenzen vorzunehmen. Auf Basis der Fähigkeit zu sehr präzisen Pseudoabstands- bzw. Code- und Trägerphasenmessungen auf zwei oder mehr Frequenzen ist ein nutzerseitiges mobiles Satellitenempfangsgerät 230 in der Lage, STEC-Werte zu ermitteln. Jedes Fahrzeug 240 mit einem mobilen Satellitenempfangsgerät 230 liefert somit sozusagen ermittelte TEC-Werte für jeden verfolgten Satelliten 220 als Zustandsinformation zusammen mit der eigenen Positionsschätzung mit seiner eigenen Positionierungsrate (typischerweise bis zu 10 Hertz) an die Vorrichtung 210, beispielsweise als eine zentrale Verarbeitungseinrichtung (CPF, Central Processing Facility) ausgeführt, die durch den Dienstanbieter betrieben wird, und die CPF verwendet die STEC-Werte für ein lonosphärenkorrekturmodell. Typischerweise sind die Fahrzeuge über irgendeine Art von Datenverbindung mit der Datenwolke bzw. Cloud verbunden. Die TEC-Daten werden beispielsweise von jedem der Fahrzeuge 240 mit der zu einer Bandbreite und Leistungsfähigkeit der Datenverbindung passenden Datenrate an den Dienstanbieter übertragen. Die Dienstanbieter verwenden die berechneten TEC-Werte, um ihre Schätzwerte des Verhaltens der Ionosphäre zu optimieren, beispielsweise zwischen Gitterpunkten eines Dünnschicht-Sphärenmodells.

Die Korrekturdaten 215, 275, 285, 295 können auch von einem GNSS-Empfänger bzw. Satellitenempfangsgerät 230 erhalten werden, dass zum Erfassen von Signalen auf drei oder mehr Frequenzen in der Lage ist, mit offenen Signalen für Messungen mit geringerem Rauschen, was eine Beseitigung von Ionosphärenerscheinungen höherer Ordnung ermöglichen kann. Um ein vollständigeres Bild der Ionosphäre zu bestimmen, können die Korrekturdaten 215, 275, 285, 295 auch in hoch entwickelte Modellalgorithmen eingeleitet werden, wie beispielsweise Mehrschichtenmodelle bzw. Multi-Layer Models. Die Korrekturdaten 215, 275, 285, 295 können durch einen Dienstanbieter verwendet werden, um präzisere Schätzwerte von lonosphärenkorrekturen an ihre Nutzer von Navigation und Positionsbestimmung zu übertragen, oder dieselben können verwendet werden, um eine Raumwetterbestimmung für unterschiedliche Anwendungen zu unterstützen, wie beispielsweise Radioastronomie, Flugverkehrskommunikation, Stromnetze, etc., oder dieselben können zu besseren wissenschaftlichen Modellen der Ionosphäre beitragen.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (300) zum Bereitstellen von Korrekturdaten (215, 275, 285, 295) zur Satellitennavigation, wobei das Verfahren (300) zumindest folgende Schritte aufweist:
Einlesen (320) einer Mehrzahl von Zustandssignalen (235, 255, 265) über die Ionosphäre der Erde von einer Schnittstelle (250) zu einer Mehrzahl von als Mehrfrequenz-Satellitenempfangsgeräte ausgeführten mobilen Satellitenempfangsgeräten (230) zur Satellitennavigation, wobei jedes Zustandssignal (235, 255, 265) eine geografische Position eines der Satellitenempfangsgeräte (230) und eine unter Verwendung mindestens eines zwischen zumindest einem Satelliten (220) und dem Satellitenempfangsgerät (230) übertragenen Satellitensignals (225) bestimmte Zustandsinformation der Ionosphäre der Erde aufweist, wobei im Schritt (320) des Einlesens zumindest eine Teilmenge der Zustandssignale (235, 255, 265) von einer Schnittstelle (250) zu einer Mehrzahl von fahrzeugmontierten Satellitenempfangsgeräten (230) eingelesen wird;
Ermitteln (310) der Korrekturdaten (215, 275, 285, 295) unter Verwendung der Zustandssignale (235, 255, 265)
Ausgeben der Korrekturdaten an die Mehrzahl von Satellitenempfangsgeräten (230);
wobei das Verfahren damit gekennzeichnet ist, dass es den folgenden Schritt aufweist:
Ausgeben (330) der Korrekturdaten (215, 275, 285, 295) an den zumindest einen Satelliten (220), wobei die Korrekturdaten (215, 275, 285, 295) für eine Korrektur eines Übertragens des mindestens einen Satellitensignals (225) zwischen dem zumindest einen Satelliten (220) und der Mehrzahl von mobilen Satellitenempfangsgeräten (230) verwendbar sind.

2. Verfahren (300) gemäß Anspruch 1, bei dem im Schritt (310) des Ermittelns die Korrekturdaten (215, 275, 285, 295) unter Verwendung einer Mehrzahl von Referenz-Zustandssignalen (115) unter Verwendung eines lonosphärenkorrekturmodells und/oder unter Verwendung eines Modellalgorithmus ermittelt werden, wobei die Referenz-Zustandssignale (115) von stationären Referenz-Satellitenempfangsgeräten (112, 114) eingelesene Signale repräsentieren.

3. Verfahren (300) gemäß Anspruch 2, bei dem im Schritt (310) des Ermittelns die Korrekturdaten (215, 275, 285, 295) in hoch entwickelte Modellalgorithmen eingeleitet werden, wie beispielsweise Mehrschichtenmodelle bzw. Multi-Layer Models.

4. Verfahren (300) gemäß einem der vorangegangenen Ansprüche, bei dem die Zustandsinformation einen Gesamtelektroneninhalt als Kenngröße der Ionosphäre der Erde repräsentiert, wobei der Gesamtelektroneninhalt als ein Produkt aus Elektronendichte und Weg, gemessen in Elektronen je Quadratmeter definiert ist.

5. Verfahren (300) gemäß Anspruch 4, bei dem der Gesamtelektroneninhalt einen mittels eines der mobilen Satellitenempfangsgeräte (230) ermittelten STEC-Wert (STEC = schiefer TEC oder engl. slant TEC; TEC = Total Electron Content) repräsentiert.

6. Verfahren (300) gemäß einem der vorangegangenen Ansprüche, mit einem Schritt (340) des Bestimmens der Zustandsinformation unter Verwendung einer Signalveränderung des mindestens einen Satellitensignals (225), wobei die Signalveränderung ein Ergebnis eines Vergleichs zumindest einer Signaleigenschaft bezogen auf zumindest zwei Übertragungsfrequenzen des mindestens einen Satellitensignals (225) repräsentiert.

7. Vorrichtung (210; 230), die eingerichtet ist, um Schritte des Verfahrens (300) gemäß einem der vorangegangenen Ansprüche in entsprechenden Einheiten auszuführen und/oder anzusteuern.

8. Computerprogramm, das dazu eingerichtet ist, das Verfahren (300) gemäß einem der vorangegangenen Ansprüche auszuführen und/oder anzusteuern.

9. Maschinenlesbares Speichermedium, auf dem das Computerprogramm nach Anspruch 8 gespeichert ist.

## Claims

1. Method (300) for providing correction data (215, 275, 285, 295) for satellite navigation, wherein the method (300) comprises at least the following steps:
reading in (320) a plurality of state signals (235, 255, 265) relating to the Earth's ionosphere from an interface (250) to a plurality of mobile satellite receivers (230), which are in the form of multi-frequency satellite receivers, for satellite navigation, wherein each state signal (235, 255, 265) has a geographical position of one of the satellite receivers (230) and state information relating to the Earth's ionosphere that is determined using at least one satellite signal (225) transmitted between at least one satellite (220) and the satellite receiver (230), wherein, in the reading-in step (320), at least one subset of the state signals (235, 255, 265) is read in from an interface (250) to a plurality of vehicle-mounted satellite receivers (230);
determining (310) the correction data (215, 275, 285, 295) using the state signals (235, 255, 265);
outputting the correction data to the plurality of satellite receivers (230);
wherein the method is **characterized in that** it has the following step:
outputting (330) the correction data (215, 275, 285, 295) to the at least one satellite (220), wherein the correction data (215, 275, 285, 295) can be used to correct a transmission of the at least one satellite signal (225) between the at least one satellite (220) and the plurality of mobile satellite receivers (230).

2. Method (300) according to Claim 1, in which, in the determining step (310), the correction data (215, 275, 285, 295) are determined using a plurality of reference state signals (115) using an ionosphere correction model and/or using a model algorithm, wherein the reference state signals (115) represent signals read in from stationary reference satellite receivers (112, 114).

3. Method (300) according to Claim 2, in which, in the determining step (310), the correction data (215, 275, 285, 295) are introduced into highly developed model algorithms, such as multi-layer models.

4. Method (300) according to one of the preceding claims, in which the state information represents a total electron content as the characteristic variable of the Earth's ionosphere, wherein the total electron content is defined as a product of electron density and distance, measured in electrons per square metre.

5. Method (300) according to Claim 4, in which the total electron content represents an STEC value (STEC = slant TEC; TEC = Total Electron Content) determined by means of one of the mobile satellite receivers (230).

6. Method (300) according to one of the preceding claims, with a step (340) of determining the state information using a signal change in the at least one satellite signal (225), wherein the signal change represents a result of a comparison of at least one signal property based on at least two transmission frequencies of the at least one satellite signal (225).

7. Apparatus (210; 230) configured to carry out and/or control steps of the method (300) according to one of the preceding claims in appropriate units.

8. Computer program configured to carry out and/or control the method (300) according to one of the preceding claims.

9. Machine-readable storage medium on which the computer program according to Claim 8 is stored.

## Revendications

1. Procédé (300) permettant de fournir des données de correction (215, 275, 285, 295) pour la navigation par satellite, le procédé (300) comprenant au moins les étapes suivantes :
lecture (320) d'une pluralité de signaux d'état (235, 255, 265) concernant l'ionosphère terrestre à partir d'une interface (250) vers une pluralité d'appareils de réception satellite (230) mobiles pour la navigation par satellite, mis en œuvre sous forme d'appareils de réception satellite multifréquences, chaque signal d'état (235, 255, 265) présentant une position géographique de l'un des appareils de réception satellite (230) et une information d'état de l'ionosphère terrestre déterminée au moyen d'au moins un signal satellite (225) transmis entre au moins un satellite (220) et l'appareil de réception satellite (230), l'étape (320) de lecture comprenant la lecture d'au moins un sous-ensemble des signaux d'état (235, 255, 265) à partir d'une interface (250) vers une pluralité d'appareils de réception satellite (230) montés sur véhicule ;
détermination (310) des données de correction (215, 275, 285, 295) en utilisant les signaux d'état (235, 255, 265) ;
fournir en sortie des données de correction vers la pluralité d'appareils de réception satellite (230) ;
le procédé étant **caractérisé en ce qu'**il comprend l'étape suivante :
fourniture en sortie (330) des données de correction (215, 275, 285, 295) audit au moins un satellite (220), les données de correction (215, 275, 285, 295) étant utilisables pour la correction d'une transmission dudit au moins un signal satellite (225) entre ledit au moins un satellite (220) et la pluralité d'appareils de réception satellite (230) mobiles.

2. Procédé (300) selon la revendication 1, dans lequel, lors de l'étape (310) de détermination, les données de correction (215, 275, 285, 295) sont déterminées en utilisant une pluralité de signaux d'état de référence (115) en utilisant un modèle de correction ionosphérique et/ou en utilisant un algorithme de modélisation, les signaux d'état de référence (115) représentant des signaux lus à partir d'appareils de réception satellite de référence stationnaires (112, 114).

3. Procédé (300) selon la revendication 2, dans lequel, lors de l'étape (310) de détermination, les données de correction (215, 275, 285, 295) sont introduites dans des algorithmes de modélisation hautement développés, tels que des modèles multicouches.

4. Procédé (300) selon l'une des revendications précédentes, dans lequel l'information d'état représente un contenu total d'électrons comme caractéristique de l'ionosphère terrestre, le contenu total d'électrons étant défini comme étant un produit de la densité électronique par le trajet parcouru, mesuré en électrons par mètre carré.

5. Procédé (300) selon la revendication 4, dans lequel le contenu total d'électrons représente une valeur STEC (STEC = TEC incliné ou en angl. slant TEC, TEC = Total Electron Content) déterminée au moyen de l'un des appareils de réception satellite (230) mobiles.

6. Procédé (300) selon l'une des revendications précédentes, comprenant une étape (340) de détermination de l'information d'état en utilisant une modification de signal dudit au moins un signal satellite (225), la modification de signal représentant un résultat d'une comparaison d'au moins une propriété de signal par rapport à au moins deux fréquences de transmission dudit au moins un signal satellite (225).

7. Dispositif (210 ; 230) conçu pour exécuter et/ou commander des étapes du procédé (300) selon l'une des revendications précédentes dans des unités correspondantes.

8. Programme informatique conçu pour exécuter et/ou commander le procédé (300) selon l'une des revendications précédentes.

9. Support de stockage lisible par machine sur lequel est enregistré le programme informatique selon la revendication 8.
